(19) Europäisches Patentamt
European Patent Office
Office européen des brevets

(11) **EP 2 787 334 A1**

(12) **EUROPÄISCHE PATENTANMELDUNG**

(43) Veröffentlichungstag:
08.10.2014 Patentblatt 2014/41

(51) Int Cl.:
*G01K 1/16* (2006.01)     *G01K 7/18* (2006.01)

(21) Anmeldenummer: **14163638.1**

(22) Anmeldetag: **04.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.04.2013 DE 102013103347**

(71) Anmelder: **Alopex ONE UG**
**64839 Münster (DE)**

(72) Erfinder: **Soliman, Michael**
**64839 Münster-Dieburg (DE)**

(74) Vertreter: **Stoffregen, Hans-Herbert**
**Patentanwalt**
**Friedrich-Ebert-Anlage 11b**
**63450 Hanau (DE)**

(54) **Resistiver Thermosensor**

(57)    Die Erfindung bezieht sich auf einen Messträger zur Aufbringung auf einem zylindrischen thermoresistiven Sensor, insbesondere aus einem und/oder mehreren geraden und/oder gewundenen Drähten. Um insbesondere ein gutes Signal-/Rausch-Verhältnis bei einem resistiven Thermosensor zu erreichen, ist vorgesehen, der Träger an seiner Oberfläche mindestens eine weitere, äußere Schicht besitzt, für die jede der nachstehenden Eigenschaften getrennt isotrop und/oder anisotrop, d.h. unabhängig für jede räumliche Richtung, eine niedrigere und/oder höhere Wärmeleitfähigkeit und/oder Temperaturleitfähigkeit und/oder Dichte und/oder Wärmekapazität $C_i$ aufweist als die unmittelbar darunter liegende Schicht.

Figur 1.   Mehrlagiger Thermosensor in Gasrohr.

**Beschreibung**

Die Erfindung bezieht sich auf eine gegenüber dem Stande der Technik verbesserte Bauform eines resistiven Thermosensors, gemäß des Oberbegriffes des Anspruches 1.

Stand der Technik

Diese Systeme sind röhrenförmige Träger eines sehr dünnen Messdrahtes, dessen Widerstand von seiner Temperatur abhängt. Der Träger steht in thermischem Kontakt mit dem zu vermessenden Medium und überträgt Wärme, die die Drahttemperatur, verändert auf den Draht. Weil der Träger eine große Oberfläche im Vergleich zum Draht besitzt, überträgt er, wenn er gut wärmeleitend an den Draht angekoppelt ist, mehr Wärme pro Zeiteinheit auf den Draht als der einfache, direkte Kontakt des sehr dünnen Messdrahtes mit dem zu vermessenden Medium.

Um gute Signal-zu-Rausch-Verhältnisse zu erreichen, ist es wesentlich, eine hohe Wärmeleitfähigkeit an der Außenseitengrenze des Messdrahtes zum Träger zu erreichen. Allerdings bedeuten eine hohe Wärmeleitfähigkeit des Messdrahtes an seine Anschlüsse oder eine hohe Wärmekapazität des Messdrahtes und/oder Trägers bzw. nur der Trägers-Außenschicht, dass schnelle Temperaturwechsel verwaschen/verschmiert werden, weil die übertragene Wärme nicht nur die Temperatur des Messdrahtes sondern auch eines wesentlichen Teiles des Trägers (des Teiles mit der hohen Wärmekapazität) verändern/erniedrigen/erhöhen muss.

Aufgabe der Erfindung ist es, die Nachteile des Standes der Technik zu vermieden, insbesondere ein gutes Signal-/Rausch-Verhältnis bei einem resistiven Thermosensor zu erreichen.

Die Aufgabe wird erfindungsgemäß u. a. durch die Merkmale des Anspruchs 1 gelöst.

Vorzugsweise weist der Träger an seiner Oberfläche mindestens eine weitere, äußere Schicht auf, für die jede der nachstehenden Eigenschaften getrennt isotrop und/oder anisotrop, d.h. unabhängig für jede räumliche Richtung, eine niedrigere und/oder höhere Wärmeleitfähigkeit und/oder Temperaturleitfähigkeit und/oder Dichte und/oder Wärmekapazität $C_i$ besitzt als die unmittelbar darunter liegende Schicht, so daß sich die außen anliegende Temperatur schneller am innen liegenden Sensor einstellt als dies der Fall gewesen wäre, wenn jede Schicht dieselben Eigenschaften hätte oder der thermoresistiven Sensor direkt, d.h. ohne weitere Schichten, eingesetzt worden wäre.

Der Messträger ist bevorzugt röhren- und/oder schlauch-förmig und/oder zylindrisch-hohl und/oder zylindrisch-massiv und/oder gewendelt jeweils mit variabler Dicke ausgebildet.

Die isotrop und/oder anisotrop niedrigere und/oder höhere Eigenschaft wird besonders bevorzugt durch eine Materialgrenzsicht zwischen einer inneren und/oder Oberflächen-Schicht und dem Messträger-Inneren und/oder ein zumindest an der Oberfläche isotrop und/oder anisotrop wärmeleitendes Material erreicht.

Der Thermosensor weist aufgrund einer effektiven Anisotropie der Wärmeleitfähigkeit des eventuell verschlungenen und/oder mehrteiligen, aber röhrenförmigen Trägers eines aufgebrachten Thermodrahtes, wie z. B. Pt100, sowohl eine effektive thermische Ankoppelung an das zu vermessende Material, als auch selbst eine geringe Wärmekapazität auf, um in der Lage zu sein, insbesondere auch schnelle Temperaturwechsel mit hohen Signal-zu-Rausch-Verhältnissen messen zu können.

Um also sowohl eine hohe Empfindlichkeit der Messung, d.h. ein gutes Signal-zu-Rausch-Verhältnis für lange Messungen durch eine gute Ankoppelung des Messdrahtes an den Träger zu erreichen, als auch ein gutes Signal-zu-Rausch-Verhältnis bei hohen Frequenzen, d.h. schnellen Änderungen, zu erreichen, ist es sinnvoll, die Wärmekapazität vom Äußeren in das Innere des Trägers möglichst kleiner werdend zu wählen. Dies bewirkt, da für den Temperaturhub $\Delta T = {}^{\Delta Q}/_C$ gilt (hierbei sind $\Delta Q$ die eingekoppelte Wärmemenge, $\Delta T$ die erreichte Temperatur, C die Wärmekapazität), dass, bei einer steigenden Außentemperatur, die Temperatur im Inneren schneller steigt (natürlich aber nicht über die Außentemperatur), weil weniger $\Delta Q$ übertragen werden muß, sich also schneller der Außentemperatur annähert.

Generell sind also kleine Wärmekapazitäten sinnvoll. Die Wärmekapazität eines Materiales ist im Wesentlichen jedoch von der Anzahl an Bewegungsfreiheitsgraden, seiner elektronischen Struktur abhängig, die aber auch mit ihren Bewegungen Impuls und damit Wärmeenergie übertragen, was zumeist bei gut wärmeleitenden Materialien auch eine gute Wärmeleitfähigkeit bedingt, und umgekehrt.:

Eine gute elektronische Ankoppelung bedeutet, dass der Impuls der sich bewegenden Teilchen auch schnell an die schweren Atomkerne bzw. die Atom/Molekül-Bindungen übertragen werden kann. Daher haben Metalle generell die größten Wärmekapazitäten und Wärmeleitfähigkeiten: ihre Dichte an freien Elektronen ist so groß, dass elektromagnetische Lichtwellen ihre Energie sofort elastisch auf den "See" an freien Elektronen übertragen und wieder abgeben, das Licht also reflektieren - deshalb glänzen Metalle (Siehe "Feynman-Vorlesungen über Physik: Elektromagnetismus und Struktur der Materie" California Institute of Technology, 1963, ISBN 3-486-25589-4, Band II. 3. Auflage, S. 622).

Notwendig ist also eine von Innen nach Außen größer werdende Wärmekapazität bei einer möglichst großen Wärmeleitfähigkeit des mit dem Draht verbundenen Materials, sowie einem möglichst guten Kontakt, d.h. einen großen Wärmedurchgangskoeffizienten, zwischen dem zu vermessenden Material und dem Messdraht bzw. seinem Träger bzw. einer möglichst guten Umströmung.

Dabei kann es im Rahmen dieser Erfindung durchaus sinnvoll sein, die Dicke des Messträgers zu variieren, um eine aero-/hydro-dynamisch gute Umströmung zu erreichen.:

Die effektive, d. h. die den Messdraht bei der gewünschten Messfrequenz/Messgeschwindigkeit beeinflussende Wärmekapazität lässt sich klein halten, wenn z. B. den gut wärmeleitenden, mit dem Messdraht in Kontakt stehenden Teil des Trägers dünn wählt, da dünne Schichten wenig Masse, also auch wenige zu erwärmende Teilchen/Bewegungsfreiheitsgrade - und damit eine kleine Wärmekapazität - besitzen.

Um von der großen thermischen Kontaktfläche des Messträgers überhaupt profitieren zu können, muss natürlich eine gute Impulsübertragung/Wärmeankoppelung zwischen dem Messdraht und der Außenseite des Messträgers gewährleistet sein.

Der Impuls-/Wärmetransport dieser Impulsübertragung/Wärmeankoppelung besteht im Wesentlichen in den folgenden drei Mechanismen.:

1. der van der Waals-Koppelung, d. h. der direkten Impulsübertragung/Krafteinwirkung von Messdraht-Atomen/-Molekülen auf Messträger-Atome/-Moleküle,
2. dem kurzreichweitigen Strahlungstransport (Quantenfeldaustausch a la Planckformel) zwischen der Messdrahtoberfläche und der Messträgeroberfläche,
3. dem Gas/Flüssigkeitskontakts-Wärmeaustausch, d. h. der indirekten Vermittlung über Zwischen-Moleküle/-Atome des zu vermessenden Materiales hauptsächlich zwischen der Auflage und den Drahtrundungstangentialflächen.

Für den Gastransportfall kann der Draht per Klebung mit einer sehr dünnen Haut eines gut wärmeleitfähigen Klebers angebracht werden, was den Strahlungstransport natürlich völlig dominieren würde.

Aus dem oben Gesagten folgt, dass ein Wärmeaustausch zwischen dem zu vermessenden Außenmedium und der, vorzugsweise sehr dünnen, sehr gut wärmeleitfähigen Außenschicht des Drahtträgers stattfinden kann, der im Wesentlichen röhrenförmig sein soll, aber, wenn es die äußeren Umstände erfordern, durchaus in seiner Dicke variieren (mehr hierzu unten: Lösung der Wärmeleitungsgleichung) kann, um eine bessere Einschmiegung in/Ankoppelung an das Außenmedium, bzw. dessen Strömung zu erhalten.

Hierbei gibt es zwei durchaus kombinierbare Vorgehensweisen.

I. Die Außenschicht ist von einer Innenschicht, die massiv oder hohl sein kann, wohl unterscheidbar.
Dann kann man durch eine sehr dünne Wahl der Außenschicht ihre Wärmekapazität klein halten und verhindern, dass Wärme, die die Drahttemperatur erhöhen sollte, stattdessen nur den Halter erwärmt und das Signal-zu-Rausch-Verhältnis vor allem für schnelle Temperaturwechsel und/oder hohe Frequenzen verschlechtert.
Der Grenzflächenübergang von außen nach innen kann dabei durch eine geeignete Wahl des Innenmaterials relativ zum Außenmaterial als besonders schlecht wärmeleitend gewählt werden, beispielsweise, indem die Gitterkonstanten/Glastemperaturen/Brillouin-Zonengrenzen zischen dem Innen und dem Außenmedium inkompatibel gewählt werden (Lösung der isotropen Wärmeleitungsgleichung).

II. Das Material des im Wesentlichen röhrenförmigen Drahtträgers, das jedoch, wie oben gesagt, durchaus in seiner Dicke schwanken kann, leitet die Wärme anisotrop, d. h. seine Brillouin-Zonengrenzen und damit die Ausbreitungsgeschwindigkeit von Phononen in seiner Materialstruktur sind nicht rotationssymmetrisch (Lösung der anisotropen Wärmeleitungsgleichung). In diesem Falle kann das Material, z. B. durch einen Gelspinnungsproduktionsprozess, eine selbstorganisierte und/oder unter Verscherung stattfindende Aushärtung, oder ähnliche Verfahren, die eine Material-Anisotropie erhalten/erzeugen, so gewählt werden, dass seine Wärmeleitfähigkeit in tangentialer Richtung deutlich kleiner wird als in radialer Richtung, d. h. dass der Wärmetransport in das Innere des Drahtträgers sowie von und zum Draht gut, entlang der Oberfläche aber schlecht ist (Die Fortleitung des Impulses "verirrt" sich nicht auf dem Wege nach innen).

Eine Kombination beider Techniken lässt sich z. B. vorteilhaft erreichen, indem eine Schichtung, wie in I. angegeben, von außen nach innen vorgenommen wird, wobei zusätzlich die Außenschicht, wie in II. angegeben, in tangentialer Richtung eine größere Wärmeleitfähigkeit besitzt, als in Radialer.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1 einen schematischen Aufbau eines mehrlagigen Thermosensors,

Fig. 2 eine schematische Vorderansicht des Thermosensors,

Fig. 3 eine schematische Draufsicht des Thermosensors,

Fig. 4 eine radiale Temperaturverteilung eines mehrlagigen Thermosensors mit unmittelbar über dem Messdraht variierender Wärmeleitfähigkeit und

Fig. 5 einen Ausschnitt der Temperaturverteilung des mehrlagigen Thermosensors mit unmittelbar über dem Draht variierender Wärmeleitfähigkeit.

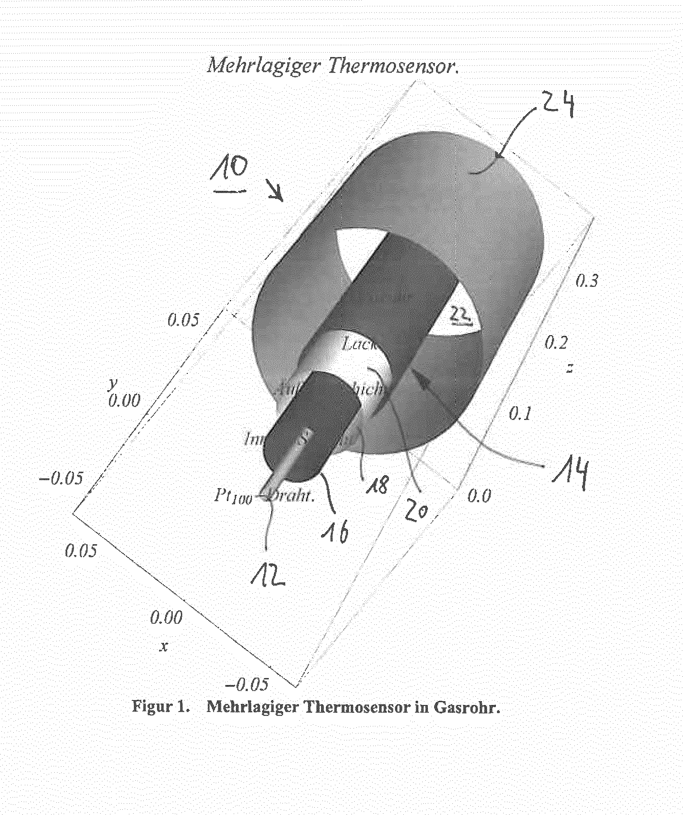

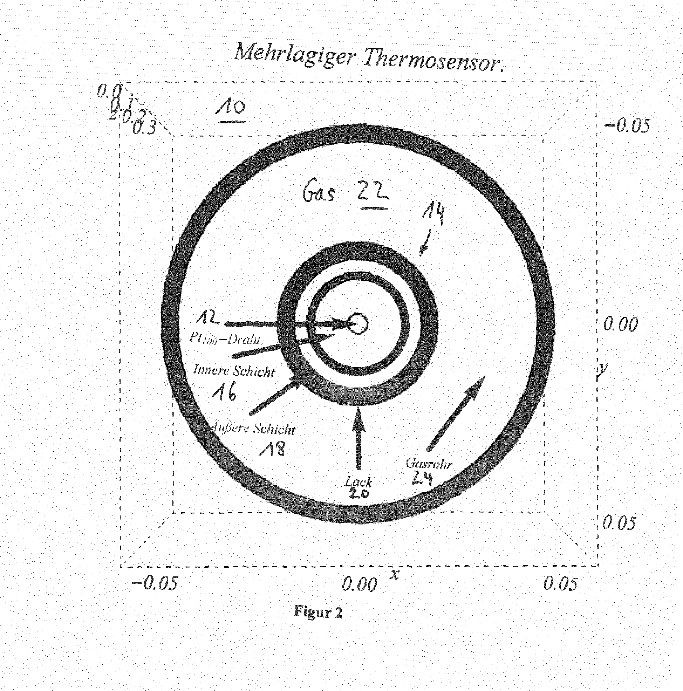

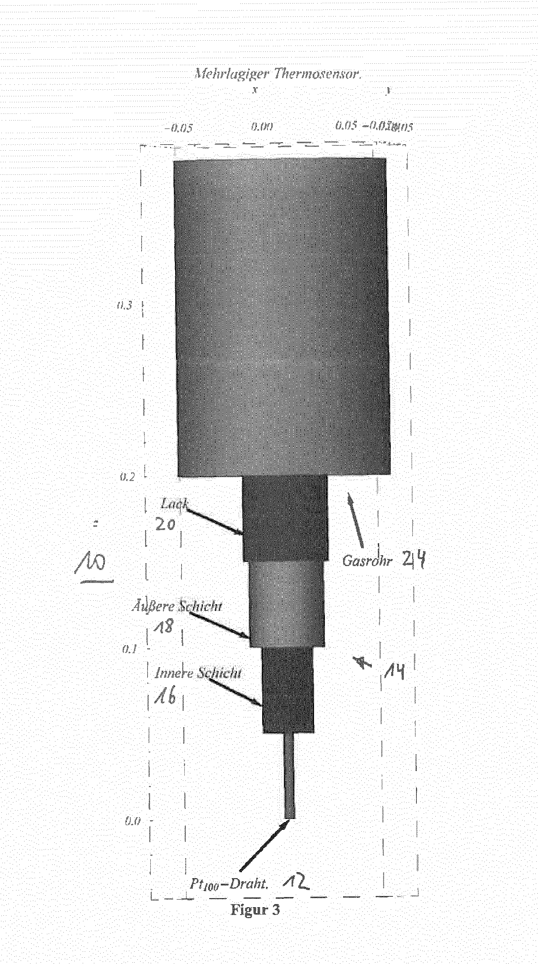

Beispielhaft ist Figuren 1 bis 3 eine Ausführungsform eines Thermosensors 10 dargestellt, umfassend einen Messdraht 12 wie $Pt_{100}$-Draht in einem mehrschichtigen vorzugsweise dreischichtigen Träger 14. Der Träger 14 umfasst zwei Hauptschichten 16, 18 und eine sehr dünne Schutzschicht 20 wie Lackschicht, die die Hauptschichten vor dem evtl. chemisch aggressiven Medium wie Gas 22 eines außen dargestellten Gasrohres 24 schützen soll.

Im Allgemeinen muss die Wärmeleitungs-Differentialgleichung in Polarkoordinaten gelöst werden:

$$\frac{\partial^2 T(\rho,\vartheta,z,t)}{(\partial\rho)^2} + \frac{\partial T(\rho,\vartheta,z,t)}{\rho\partial\rho} + \frac{\partial^2 T(\rho,\vartheta,z,t)}{\rho^2(\partial\vartheta)^2} + \frac{\partial^2 T(\rho,\vartheta,z,t)}{(\partial z)^2} + \frac{\dot{q}_i(\rho,\vartheta,z,t)}{k_i}$$

$$= \frac{\partial T(\rho,\vartheta,z,t)}{\alpha_i\partial t}$$

mit

$0 = \rho_0 \leq \rho_1 \leq \cdots \leq \rho_i \leq \cdots \leq \rho_n$ als Radien der Grenzschichten, L als der Drahtlänge sowie $k_i$, $\alpha_i$, $q_{i_0}$ als Wärmeleitfähigkeit, Temperaturleitfähigkeit und Heiz-Leistungsdichte
der jeweils i.-ten Schicht,
(dabei ist die Temperaturleitfähigkeit $\alpha_i$ durch die Dichte $\rho_{Masse,i}$, die Wärmekapazität $C_i$ und die Wärmeleitfähigkeit $k_i$

mit $\alpha_i = \frac{k_i}{\rho_{Masse,i} C_i}$ bestimmt`

$$\lim_{\rho\searrow 0} T(\rho_i,\vartheta,z,t) = \lim_{\rho\nearrow 0} T(\rho_i,\vartheta,z,t) \wedge \quad 1 \leq \cdots \leq i \leq \cdots \leq n$$

als Stetigkeitsbedingung
(Unstetigkeiten würden sofort einen Planck'schen Strahlungstransport der die Unstetigkeit ausgliche),

$$\lim_{\rho\searrow 0} \frac{k_i\partial T(\rho_i,\vartheta,z,t)}{\partial\rho} = \lim_{\rho\nearrow 0} \frac{k_{i-1}\partial T(\rho_i,\vartheta,z,t)}{\partial\rho} \wedge \quad 1 \leq \cdots \leq i \leq \cdots \leq n$$

als Wärmestrom-Stetigkeitsbedingung

$$T(\rho,\vartheta,z,0) = T_o(\rho,\vartheta,z)$$

und

$$T(\rho,\vartheta,0,t) = T_{Drahtanfang}(\rho,\vartheta,t) \wedge T(\rho,\vartheta,L,t) = T_{Drahtende}(\rho,\vartheta,t)$$

$$A_{außen}\, T(\rho_n,\vartheta,z,t) + B_{außen}\frac{\partial T(\rho_i,\vartheta,z,t)}{\partial \rho} = C_{außen}$$

beispielsweise mit $h\, T(\rho_n,\vartheta,z,t) + \frac{k_n \partial T(\rho_i,\vartheta,z,t)}{\partial \rho} = 0$ und dem Wärmedurchgangskoeffizienten h als Gesamtenergieerhaltungsbedingung. oder

$$\frac{k_n \partial T(\rho_i,\vartheta,z,t)}{\partial \rho} = \dot{q}_{außen}(\vartheta,z,t)$$

oder

$$T(\rho_i,\vartheta,z,t) = T_{außen}(\vartheta,z,t)..$$

Ist der Draht nebst Träger drehinvariant, d.h. rotationssymmetrisch, so kann man den $\frac{\partial^2 T(\rho,\vartheta,z,t)}{\rho^2(\partial\vartheta)^2}$ Term aus der Gleichung streichen.

Für letzteren Fall gibt es semi-analytische Verfahren, d.h. man muß Eigenwerte numerisch berechnen, mit deren Hilfe man analytische Lösungen formulieren kann (s. z. B. Prashant K. Jain, Suneet Singh, Rizwan-Uddin, Journal of Heat Transfer, Januar 2009, Vol. 131/011304-1. The Beginner's Guide to Mathematica ® Version 3, von Theodore W. Gray, Cambridge University Press 1997, ISBN 0-521-62202-6(hb), ISBN 0-521-62743-6(pb), Version 3 - Seite 171.).

Will man die Temperaturleitfähigkeit $\alpha_i$ bzw. Wärmeleitfähigkeit $k_i$ bzw. die Wärmekapazität $C_i$, die ja per

$$\alpha_i = \frac{k_i}{\rho_{Masse,i}C_i}$$ zusammenhängen passend wählen, so muss man das obige Gleichungssystem für eine Reihe dieser Werte lösen, sich eine gewünschte Eigenschaft heraussuchen, und diese Eigenschaft durch die Variation dieser Parameter optimieren. Dabei ist die Eigenschaft nach den obigen Ausführungen natürlich die Temperatur an der Grenzfläche Draht→innere Trägerschicht ($\rho_1 = 0.0031m$ im untenstehenden Beispiel).

Löst man also das obige Gleichungssystem unter Auslassen der $\vartheta$-Variablen numerisch für $T(\rho_i,\vartheta,z,t) = T_{außen}(\vartheta,z,t)$ und ein freies $k_2$ und setzt der Einfachheit halber z = $L/_2$' betrachtet also das Temperaturprofil in der Mitte des Drahtes (weil der Draht viel länger als dick ist, ändert sich das Temperaturprofil in der Drahtmitte mit den genannten Verfahren nur im Rahmen der Rechengenauigkeit, wenn man von der Drahtmitte um 5% abweicht), so ergibt sich das folgende Bild ($\rho_0 = 0.$, $\rho_1 = 0.003m$, $\rho_2 = 0.015m$, $\rho_3 = 0.022m$, $\rho_4 = 0.025m$, $\rho_5 = 0.0625m$, $T(\rho_5 = \rho_{außen} = 0.0625m$, $\vartheta$, z, t) = 20 $K$,

$$\dot{q}_1(\rho,\vartheta,z,t) = \cdots = \dot{q}_4(\rho,\vartheta,z,t) = 0, \dot{q}_5(\rho,\vartheta,z,t) = 1\,{}^W/_l):$$

[Aufgrund der Natur der Wärmegleichung als Diffusionsgleichung in zwei freien Variablen sehen die Plots in Zeitrichtung so aus, wie reskalierte Plots in Ortsrichtung, weshalb Letztere reichen.]

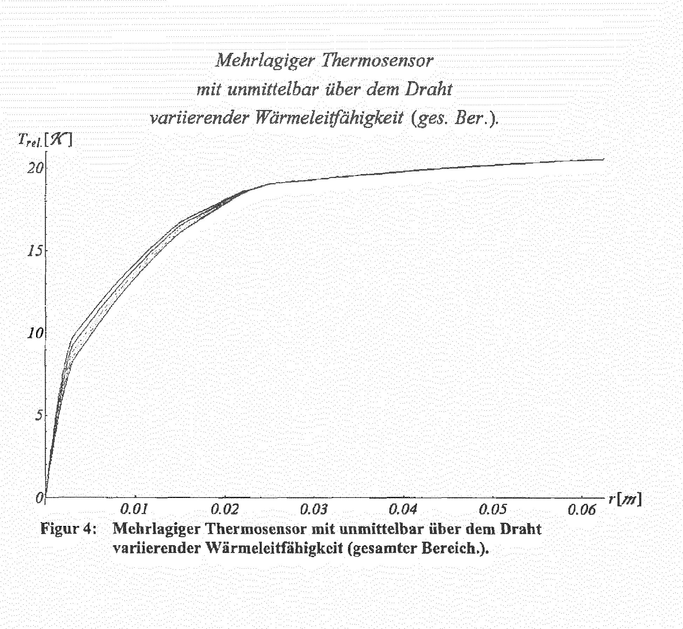

In Figur 4 ist ein $T_{relativ} \rightarrow T_{rel.}$ ($\rho$, 0, $L/_2$, 5s)-Plot dargestellt. Weil die Gleichung linear ist, kann die Temperatur im Nullpunkt beliebig kalibriert werden. Die Temperatur im gesamten Bereich $\rho_4 = 0.025m \leq \rho \leq \rho_5 = 0.0625m$ praktisch konstant, weil hier die Wärmequelle sitzt und den Wärmehaushalt dominiert.

Die verschiedenen Graphen kommen durch die Variation der Wärmeleitfähigkeit $k_2$ zu Stande, wobei die Graphen von oben nach unten je eine wachsende Wärmeleitfähigkeit bezeichnen:

Im Träger, $\rho_1$ = 0.003$m$ $\le \rho \le \rho_4$ = 0.025$m$ weicht die Temperatur sukzessive für je ein wachsendes $k_2$ und ein sinkendes $\rho$ weiter nach unten ab.

Die Knicke an den Stellen $\rho_1 \le \cdots \le \rho_i \le \cdots \le \rho_n$ werden durch die Wärmestrom-Stetigkeitsbedingung

$$\left(\lim_{\rho \searrow 0} \frac{k_i \partial T(\rho_i, \vartheta, z, t)}{\partial \rho} = \lim_{\rho \nearrow 0} \frac{k_{i-1} \partial T(\rho_i, \vartheta, z, t)}{\partial \rho}\right) \text{ erzwungen.}$$

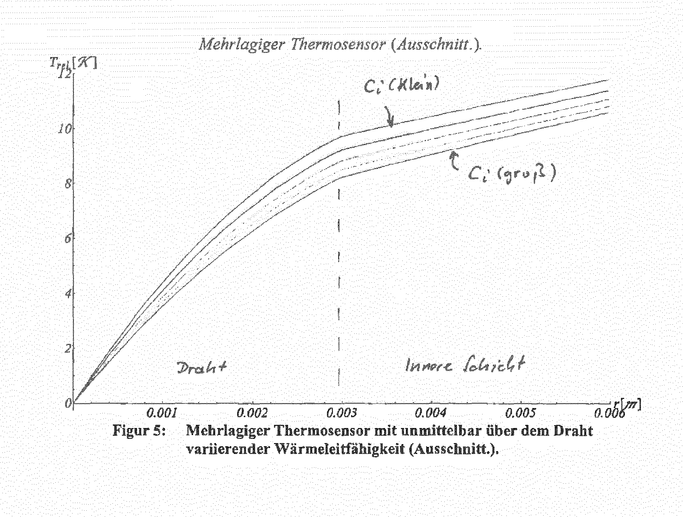

Die Figur 5 zeigt eine Ausschnittsvergrößerung von Figur 4, wobei an der Stelle $\rho_1$ das Verhältnis über die 5 Graphen $k_2/k_1$ zwar nur um 6,829% variiert - dennoch variiert die Temperatur um 18,192%, d. h. 2,66393 mal so stark, was beachtlich ist.

Man kann also bereits durch eine einfache Wahl der Wärmeleitfähigkeiten (d. h. der Materialien) der vorgestellten Thermoschichtensensoren viel erreichen.

Bedenkt man, dass man um so mehr optimieren kann, je mehr Freiheitsgrade man benutzen kann (z. B. noch eine Variation der Wärmekapazität $C_i$ oder die in Abschnitt II dargestellte Anisotropie zwischen den radialen, axialen, drahtrichtungs-tangentialen Materialeigenschaften, so können die erreichbaren Temperaturhübe nur besser/größer werden. Im Zweifelsfalle könnte man sich ja mit dem eben erreichten Temperaturhub zufrieden geben.

Die Anmeldung beschreibt ein Verfahren Temperatursensoren unter Zuhilfenahme von thermoresistiven Drähten zu bauen, indem diese in Schichten von isotropen und/oder anisotropen Träger-Materialien eingebettet werden. Dabei demonstriert sie die Ausnutzung von Materialeigenschaften-Freiheitsgraden zur Optimierung der Reaktionsgeschwindigkeit und/oder des Signal-zu-Rausch-Verhältnisses.

**Patentansprüche**

1. Messträger zur Aufbringung auf einem zylindrischen thermoresistiven Sensor, insbesondere aus einem und/oder mehreren geraden und/oder gewundenen Drähten,
   **dadurch gekennzeichnet,**
   der Träger an seiner Oberfläche mindestens eine weitere, äußere Schicht besitzt, für die jede der nachstehenden Eigenschaften getrennt isotrop und/oder anisotrop, d.h. unabhängig für jede räumliche Richtung, eine niedrigere und/oder höhere Wärmeleitfähigkeit und/oder Temperaturleitfähigkeit und/oder Dichte und/oder Wärmekapazität $C_i$ aufweist als die unmittelbar darunter liegende Schicht.

2. Messträger nach Anspruch 1,
   **dadurch gekennzeichnet,**
   **dass** der Meßträger röhren- und/oder schlauch-förmig und/oder zylindrisch-hohl und/oder zylindrisch-massiv und/oder gewendelt jeweils mit variabler Dicke ausgebildet ist.

3. Messträger nach Anspruch 1 oder 2,
   **dadurch gekennzeichnet,**
   **dass** die isotrop und/oder anisotrop niedrigere und/oder höhere Eigenschaft durch eine Materialgrenzsicht zwischen einer inneren und/oder Oberflächen-Schicht und dem Meßträger-Inneren und/oder ein zumindest an der Oberfläche isotrop und/oder anisotrop wärmeleitendes Material erreicht wird.

4. Messträger nach zumindest einem der vorhergehenden Ansprüche,
   **dadurch gekennzeichnet ,**
   **dass** der Messträger eine effektive Anisotropie der Wärmeleitfähigkeit aufweist.

5. Messträger nach zumindest einem der vorhergehenden Ansprüche,
   **dadurch gekennzeichnet ,**
   **dass** die Wärmekapazität vom Äußeren in das Innere des Messträgers kleiner wird.

6. Messträger nach zumindest einem der vorhergehenden Ansprüche,
   **dadurch gekennzeichnet ,**
   **dass** das Material/Medium der Außenschicht eine Gitterkonstante und/oder Glastemperatur und/oder Brillouin-Zonengrenze aufweist, die zu einer Gitterkonstanten, Glastemperatur und/oder Brillouin-Zonenngrenze des Materials /Mediums der Innenschicht inkompatibel ist.

7. Messträger nach zumindest einem der vorhergehenden Ansprüche,
**dadurch gekennzeichnet ,**
**dass** die Innenschicht aus einem Material/Medium besteht, welches die Wärme anisotrop leitet.

8. Messträger nach zumindest einem der vorhergehenden Ansprüche,
**dadurch gekennzeichnet ,**
**dass** das Material durch einen Gelspinnungsproduktionsprozess, eine selbstorganisierte und/oder unter Verscherung stattfindende Aushärtung hergestellt ist.

9. Messträger nach zumindest einem der vorhergehenden Ansprüche,
**dadurch gekennzeichnet ,**
**dass** das Material in tangentialer Richtung eine Wärmeleitfähigkeit aufweist, die kleiner wird als in radialer Richtung ist.

10. Messträger nach zumindest einem der vorhergehenden Ansprüche,
**dadurch gekennzeichnet ,**
**dass** der Messträger an seiner Oberfläche eine für jede der nachstehenden Eigenschaften getrennt isotrop und/oder anisotrop, d. h. unabhängig für jede räumliche Richtung niedrige und/oder höhere Wärmeleitfähigkeit und/oder Temperaturleitfähigkeit und/oder Dichte und/oder Wärmekapazität $C_{iU}$ besitzt als in seinem Inneren oder mindestens einer Schicht seines Inneren.

11. Messträger nach zumindest einem der vorhergehenden Ansprüche,
**dadurch gekennzeichnet ,**
**dass** die isotrop und/oder anisotrop niedrigere und/oder höhere Wärmeleitfähigkeit und/oder Temperaturleitfähigkeit und/oder Dichte und/oder Wärmekapazität durch eine Materialgrenzschicht zwischen einer inneren und/oder Oberflächen-Schicht und dem Messträger-Inneren und/oder ein zumindest an der Oberfläche isotrop und/oder anisotrop wärmeleitendes Material erreicht ist.

12. Messträger für einen thermoresistiven Draht,
**dadurch gekennzeichnet,**
**dass** der Messträger an seiner Oberfläche eine höhere Wärmeleitfähigkeit als in seinem Inneren besitzt.

13. Messträger für einen thermoresistiven Draht, vorzugsweise nach Anspruch 1 oder 12,
**dadurch gekennzeichnet,**
**dass** der Messträger röhren- und/oder schlauchförmig und/oder zylindrisch-hohl und/oder zylindrisch-massiv, ggfs. jeweils mit variabler Dicke, ist.

14. Messträger für einen thermoresistiven Draht, vorzugsweise nach Anspruch 1 und/oder 2,
**dadurch gekennzeichnet,**
**dass** der Messträger eine höhere Oberflächenwärmeleitfähigkeit durch eine Materialgrenzschicht zwischen einer Oberflächenschicht und Messträgerinnerem aufweist und/oder ein zumindest an der Oberfläche anisotrop wärmeleitendes Material aufweist.

15. Messträger zur Aufbringung auf einem zylindrischen thermoresistiven Sensor, bestehend aus einem und/oder mehreren geraden und/oder gewundenen Drähten
**dadurch gekennzeichnet,**
**dass**

a) der Messträger röhren- und/oder schlauch-förmig und/oder zylindrisch-hohl und/oder zylindrisch-massiv jeweils mit variabler Dicke ist und/oder
b) der Träger an seiner Oberfläche eine für jede der nachstehenden Eigenschaften getrennt isotrop und/oder anisotrop, d. h. unabhängig für jede räumliche Richtung, niedrigere und/oder höhere Wärmeleitfähigkeit und/oder Temperaturleitfähigkeit und/oder Dichte und/oder Wärmekapazität $C_i$ u besitzt als in seinem Inneren und/oder mindestens einer Schicht seines Inneren und/oder
c) die isotrop und/oder anisotrop niedrigere und/oder höhere Eigenschaft gemäß Ziffer 0 dieses Anspruchs durch eine Materialgrenzsicht zwischen einer inneren und/oder Oberflächen-Schicht und dem Messträger-Inneren und/oder ein zumindest an der Oberfläche isotrop und/oder anisotrop wärmeleitendes Material erreicht wird.

Figur 1.  Mehrlagiger Thermosensor in Gasrohr.

Figur 2

Figur 3

*Mehrlagiger Thermosensor*
*mit unmittelbar über dem Draht*
*variierender Wärmeleitfähigkeit (ges. Ber.).*

**Figur 4:** Mehrlagiger Thermosensor mit unmittelbar über dem Draht variierender Wärmeleitfähigkeit (gesamter Bereich.).

Figur 5: Mehrlagiger Thermosensor mit unmittelbar über dem Draht variierender Wärmeleitfähigkeit (Ausschnitt.).

**EP 2 787 334 A1**

Europäisches Patentamt
European Patent Office
Office européen des brevets

# EUROPÄISCHER RECHERCHENBERICHT

Nummer der Anmeldung

EP 14 16 3638

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 768 117 A (DEGUSSA) 13. Februar 1957 (1957-02-13) | 1,2,8,13 | INV. G01K1/16 |
| Y | * Seite 1, Zeilen 10-12,47-61 * * Seite 1, Zeile 88 - Seite 2, Zeile 1 * * Seite 2, Zeilen 106-119 * * Seite 3, Zeilen 18-26,46-60; Abbildungen 1,2 * | 3-7, 9-12,14, 15 | G01K7/18 |
| Y,D | PRASHANT K. JAIN; SUNEET SINGH; RIZWAN-UDDIN: "Analytical Solution to Transient Asymmetric Heat Conduction in a Multilayer Annulus", JOURNAL OF HEAT TRANSFER, Bd. 131, Januar 2009 (2009-01), Seiten 011304-1-011304-7, XP002728550, | 3-7, 9-12,14, 15 | |
| A | * das ganze Dokument * | 1,2,8,13 | |

RECHERCHIERTE SACHGEBIETE (IPC)

G01K

Der vorliegende Recherchenbericht wurde für alle Patentansprüche erstellt

| Recherchenort | Abschlußdatum der Recherche | Prüfer |
|---|---|---|
| Den Haag | 18. August 2014 | Phleps, Stefanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 3638

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2014

| Im Recherchenbericht angeführtes Patentdokument | Datum der Veröffentlichung | Mitglied(er) der Patentfamilie | Datum der Veröffentlichung |
|---|---|---|---|
| GB 768117 A | 13-02-1957 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Feynman-Vorlesungen über Physik: Elektromagnetismus und Struktur der Materie. California Institute of Technology. 1963, vol. II, 622
- **PRASHANT K. JAIN ; SUNEET SINGH ; RIZWAN-UDDIN.** *Journal of Heat Transfer,* Januar 2009, vol. 131, 011304-1
- **THEODORE W. GRAY.** The Beginner's Guide to Mathematica ® Version 3. Cambridge University Press, 1997, 171